Europäisches Patentamt

European Patent Office

Office européen des brevets

(11) Publication number: **0 050 456**
**A1**

# EUROPEAN PATENT APPLICATION

(21) Application number: **81304702.4**

(22) Date of filing: **09.10.81**

(51) Int. Cl.³: **H 02 K 19/04**

(30) Priority: **11.10.80 JP 142294/80**
**17.11.80 JP 161583/80**
**14.01.81 JP 4078/81**
**18.04.81 JP 58742/81**

(43) Date of publication of application: **28.04.82**
**Bulletin 82/17**

(84) Designated Contracting States: **CH DE FR GB LI NL**

(71) Applicant: **SANKYO SEIKI MFG. CO. LTD., 5329-banchi, Shimosuwamachi, Suwa-gun Nagano-ken (JP)**
(84) Designated Contracting States: **CH DE FR LI NL**

(71) Applicant: **Watanuki, Takao, 2-4-21 Miyoshicho, Nakanoshi Naganoken (JP)**
(84) Designated Contracting States: **GB**

(72) Inventor: **Fumito, Komatsu, 69-1632-12-banchi Nomura Aza, Ooaza Hirooka Shiozirishi Naganoken (JP)**

(74) Representative: **Armitage, Ian Michael et al, MEWBURN ELLIS & CO. 2/3 Cursitor Street, London EC4A 1BQ (GB)**

(54) **Electric motor.**

(57) An AC synchronous motor has a permanent-magnet rotor (10) and a stator (14) and a commutator (18a, b) rotatable in union with the rotor. One or more rectifiers (22) are incorporated in the rotating commutator to interconnect the commutator sliders (18a, b). This provides simple starting means and smaller motors. It can be applied also to three-phase motors giving a unified pole conversion circuit rather than the conventional 3-stage conversion means for switching the stator poles.

EP 0 050 456 A1

## ELECTRIC MOTOR

The present invention relates to motors, more particularly to AC synchronous motors capable of auto-start in which the structure consists of a permanent-magnet rotor, a stator, brushes, and a commutator in connection with the rotor, and that the commutator is provided with a rectifying means which rotates in union with the rotor so that, of the AC current supplied from the power supply, the component required to energize rotor's rotation is fed to stator coil.

Conventional AC synchronous motors use various auxiliary starting means for acceleration at starting up to synchronous speed. Such means are undesirably complicated for cost saving, miniaturization, or weight reduction.

Several means have been devised to remove these demerits. Shizuo Karasawa, "SYNCHRONOUS MOTOR", U.S.P. 1992826 is for single-phase synchronous motors, in which the rotor shaft is provided with a common terminal and a commutator with segments corresponding to the rotor pole positions with 180° circumferential angle and in which rectifiers with opposite directions have one end connected to the common terminal and their other ends connected to brushes in sliding contact with the above-mentioned commutator segments. As a consequence of this structure, at starting, a DC (pulsed current) corresponding to rotor's magnetic poles is passed through the exciting coil to energize the rotation of the rotor in a prescribed direction until the synchronous speed is attained, where synchronous operation is effected.

Similar technological ideas are made known by Mallory, "SYNCHRONOUS MOTOR STATOR CIRCUIT EMPLOYING COMMUTATOR AND RECTIFIER DURING STARTING", U.S.P. 3394296 and Itsuki Ban, "SYNCHRONIZED DC MOTORS", Japanese Application Laid-open

0050456

Showa 48(1973)-77318.

The present inventor, noticing the feature of these patents that their motors are provided with immobile rectifiers, researched to have rectifiers installed within the commutator rotate in union with the commutator, and succeeded in producing an extremely simple starting means.

By this means synchronous motors may be produced of lighter weight and smaller size and at lower cost and which have an extremely high power efficiency.

Also the present invention can provide synchronous motors with simplified conversion circuits, applicable for three-phase power supply, which do not employ three-stage of conversion means for switching the stator poles but use unified conversion circuits.

The principle of the present motor can be stated as follows. Let the number of poles for the motor be 2n (n is an integral number). The rotor has its 2n-pole permanent magnet disposed around the rotor shaft with circumferential angle $2\pi/2n$ so that the poles are arranged alternately. The stator has $m(\leqq n)$ pieces of coil-wound field core, driven by rectified current, disposed around the rotor shaft at m of n positions having $2\pi/n$ circumferential-angle intervals. A commutator composed of 2n sliders has its sliders disposed around the rotor shaft at equal $2\pi/2n$ intervals. The sliders are connected one to another via one or more rectifiers so that the sliders are made conductive alternately in the order (+), (−), (+), (−), and so on in the circumferential direction. At least one pair of fixed brushes are provided, one brush of a pair contacting a (+) slider while the other contacts a (−) slider, one of the brushes of the or each pair being connected directly to the AC power supply and the other to the same terminal of the stator coils.

The drawings illustrate embodiments of the present invention.

Fig. 1 shows a single-phase 2-pole motor.

Fig. 2 shows a single-phase 4-pole motor.

Fig. 3 is a cross-sectional view of a switching device for 4-pole motors.

Fig. 4 is a cross-sectional view of a switching device for 6-pole motors.

Figs. 5 and 6 illustrate condenser-utilizing circuits.

Fig. 7 is a cross-sectional view of an embodiment with the rotor disposed outside and the stator inside.

Fig. 8 illustrates a single-phase motor utilizing a shading coil.

Fig. 9 illustrates the principle of 2-pole three-phase motors.

Fig. 10 is a cut-away view of a 2-pole three-phase motor.

Fig. 11 illustrates the principle of 4-pole three-phase motors.

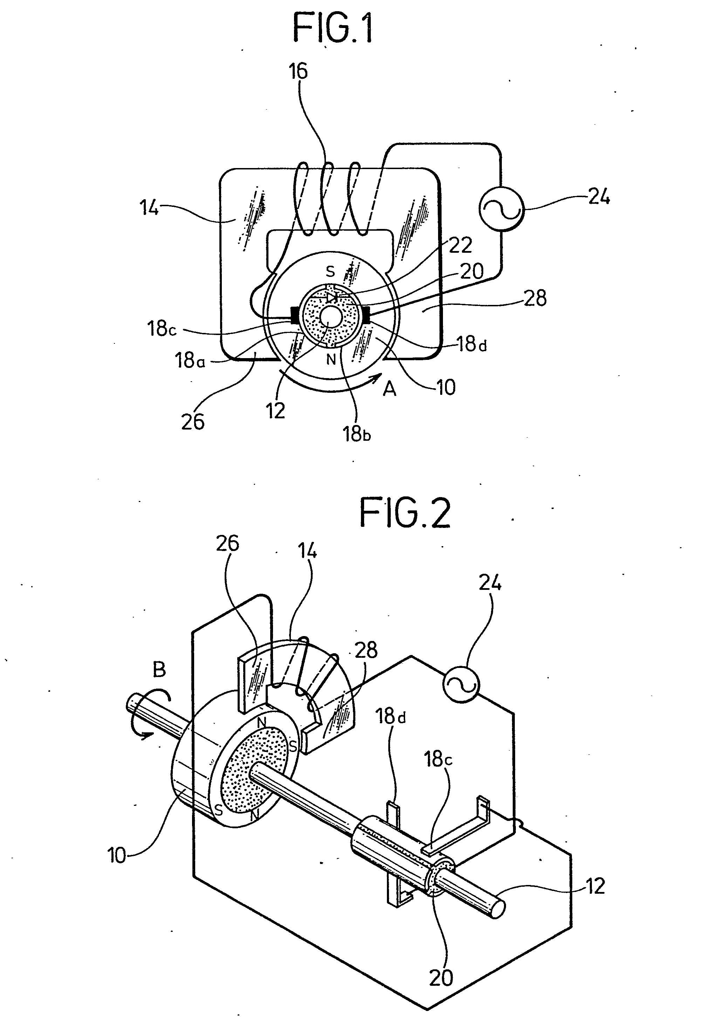

An embodiment of the present invention will be described with reference to Fig. 1.

The rotor 10 is a permanent magnet, which is composed of two poles and which rotates with rotor shaft 12. The stator 14 has its field core wound with coil 16 and is positioned close to rotor 10. The sliders 18a and 18b are disposed around rotor shaft 12 on an insulator 20 close to rotor 10. One of them corresponds to the circumferential angle from N to S pole of rotor 10 and the other to that from S to N pole. There are fixed gaps between the sliders, each of which covers a circumferential angle slightly less than $180^{\circ}$. A diode 22 serves to allow current to flow from slider 18a to 18b. Brushes 18c and 18d are in contact with sliders 18a and 18b, respectively. Rotation of the sliders will cause alternate contact between the brushes and sliders. Brush 18c is connected to power supply 24 via coil 16, whereas brush 18d is connected directly to power supply 24.

This structure permits the turning-on of AC power supply 24 to let diode 22 pass current through coil 16 only while the phase corresponds to positive half waves in such a direction as magnetizes poles 26 and 28 to become N and S poles, respectively. This magnetization will give rotor 10 a turning force in the arrow-marked direction A.

When rotor 10 rotates to bring sliders 18b and 18a into contact with brushes 18c and 18d, respectively, current will be caused to flow through coil 16 in such a direction as reverses the magnetization of poles 26 and 28, i.e. poles 26 and 28 become S and N poles, respectively. This magnetization will give rotor 10 further accelerative turning force in the arrow-marked direction A.

Thus, the poles of coil 16 are reversed between N and S poles every $180^{\circ}$ rotation of rotor 10 with resulting continued acceleration, until the rotor becomes synchronous with the AC of the power supply.

A 2-pole embodiment of the present invention has been described. However, the technological idea of the present invention is applicable in general to 2n-pole motors (n being an integral number).

Fig. 2 provides an example of the application of the present invention to 4-pole motors. In both Figs. 1 and 2, the same structural elements are indicated by the same reference numbers. In motors with four or more poles, for example, as shown in Fig. 2, stator 14 consists at least of an adjacent pair of poles 26 and 28.

It should be noted that if, in addition to stator 14, we have another stator (not shown) with a pair of poles opposite to those of stator 14 with a $180^{\circ}$ phase difference, it produces increased torque. In this case, all the coils of the stators may be connected using brush 18c in common.

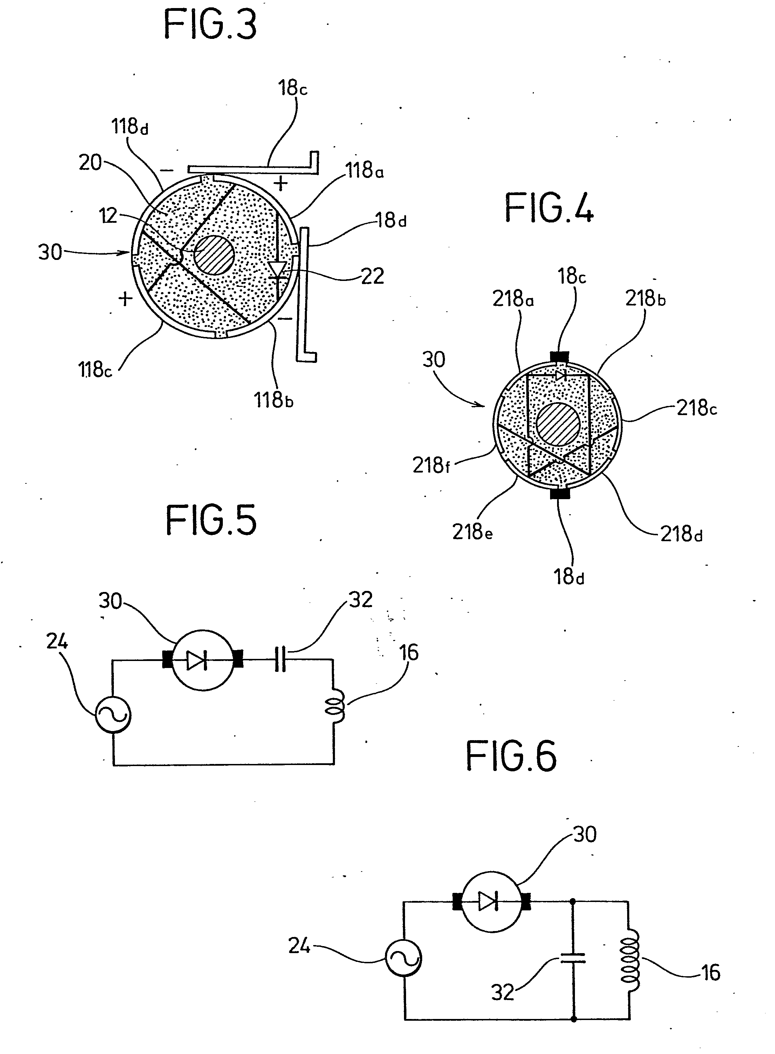

Fig. 3 shows the cross-sectional structure of a switching device 30 equiped with sliders 118a, 118b, 118c, and 118d for the case of 4-pole motor. The sliders are disposed around rotary shaft 12 on insulator 20, each corresponding to the circumferential angle at which each pole on rotor 10 is disposed. There are fixed gaps between the sliders, each slider covering a circumferential angle slightly less than $90^{\circ}$. Slider 118a is connected to the clockwise-adjacent slider 118b via diode 22 in such a way that current will flow from slider 118a to slider 118b. Sliders 118a and 118b are connected directly to sliders 118c and 118d, respectively. Brushes 18c and 18d are, at the point shown, in contact with sliders 118a and 118d, respectively, brush 18c is connected to power supply 24 via coil 16, and brush 18d is connected directly to power supply 24.

This structure permits the turning-on of AC power supply 24 to let diode 22 pass current through coil 16 only while the phase corresponds to positive half waves in such a direction as to magnetize poles 26 and 28 to become N and S poles, respectively. This magnetization will give rotor 10 a turning force in the arrow-marked direction A.

When rotor 10 rotates to bring sliders 118b and 118c into contact with brushes 18c and 18d, respectively, current will be caused to flow through coil 16 in such a direction as reverses the magnetization 26 and 28, i.e. poles 26 and 28 become S and N poles, respectively. This magnetization will give rotor 10 further accelerative turning force in the arrow-marked direction A.

Thus, the poles of coil 16 are reversed between N and S poles every $90^{\circ}$ rotation of rotor 10 with resulting continued acceleration, until the rotor becomes synchronous with the AC of the power supply.

Fig. 4 shows the cross-sectional structure of sliders 218a,218b,218c,218d,218e, and 218f in the case of a 6-pole motor. Slider 218a is connected to the clockwise-adjacent slider 218b via diode 22 in such a way that current will flow from slider 218a to slider 218b. Sliders 218a and 218b are connected directly to sliders 218c and 218f via sliders 218e and 218d, respectively. Brushes 18c and 18d are in contact with sliders 218a and 218d, respectively, with the sliders opposing to each other. The brushes may be in contact with sliders 218a and 218b disposed adjacent to each other.

In general, the pair of brushes may be disposed anywhere as long as one touches a (+) slider and the other a (-) slider.

Also, in general, even if the sliders are disposed so as not to be in correspondence with the disposition of the rotor's poles but to have a phase difference corresponding to a constant circumferential angle, an equivalent operation will result if the brushes are placed at positions spaced apart by that circumferential angle.

In the case of 2n-pole motors, the 2n arcuate slider pieces are disposed around a rotary plate placed perpendicular to the rotor shaft and a pair of brushes may be provided in contact with these sliders (not shown).

The present invention may be applied to construction of 3-phase AC motors by having three sets of two sliders connected with a diode-containing wiring, a pair of brushes corresponding to the sliders, and a stator connected in the above-mentioned relation disposed with $120^\circ$ phase displacement to one another in correspondence with the 3-phase AC power supply (not shown).

The output of the motors described above may greatly be improved if, in the cyclic circuit from AC power supply 24 via switching device 30 (Fig. 5) and stator coil 16 to power supply 24, is placed a condenser 32 between switching device 30 and coil 16 in series as shown in Fig. 5 or in parallel as shown in Fig. 6, thus forming an LC circuit. When both the poles of condenser 32 are short-circuited, the phase of the current is essentially delayed $90^\circ$ to the

voltage and accordingly, in the absence of condenser 32, the rotation of the rotor while being approximately in the synchronous state will allow coil 16 to have only about half the half-wave current flowing, whereas in the presence of condenser 32, the phase of the current flowing through coil 10 is caused to advance so as to allow almost all the half-wave current to flow.

The present invention may be embodied also by disposing the permanent magnet rotor on the outside and the stator on the inside, as follows.

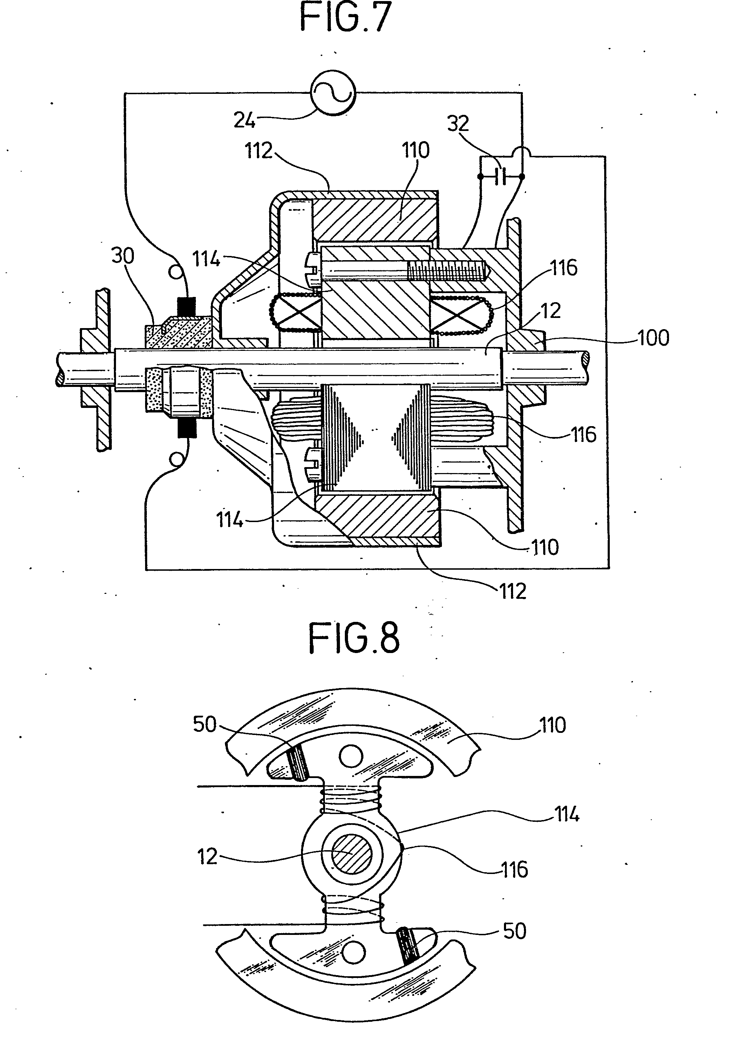

In Fig. 7, a permanent-magnet rotor 110 in the form of ring has cap 112 capable of shielding magnetic flux and which is designed to rotate in union with rotor shaft 12. The stator 114 is fixed on bearing 100 of rotor shaft 12 and is inserted into the space between the rotor shaft 12 and rotor 110. The coil is shown at 116 and the above-mentioned condenser 32 is provided for improving the input. Such motors also may employ a switching device 30.

Fig. 8 illustrates stator 114 for the motor shown in Fig. 7. Here, the rotor 110 is sometimes positioned at a dead point where the magnetic field produced by coil 116 is in equilibrium with the magnetic field produced by the permanent magnet of rotor 110 with respect to repulsion and attraction, thereby preventing rotor 110 from starting its rotation. To counter this the field core of stator 114 has a shading coil 50. The short-circuit current flowing through shading coil 50 will produce a magnetic field which is essentially different in phase by $90^{\circ}$ from the magnetic field produced at the pole of stator 114, resulting in a state of magnetic non-equilibrium. Thus, rotor 110 can leave the dead point, and start to rotate. A shading coil 50 may be applied to any single-phase AC motor hitherto described.

When using a three-phase power supply, instead of

0050456

-8-

having the above-mentioned 3-stage set of conversion means with $120^{\circ}$ phase difference, the conversion circuit may be united and simplified, as described below.

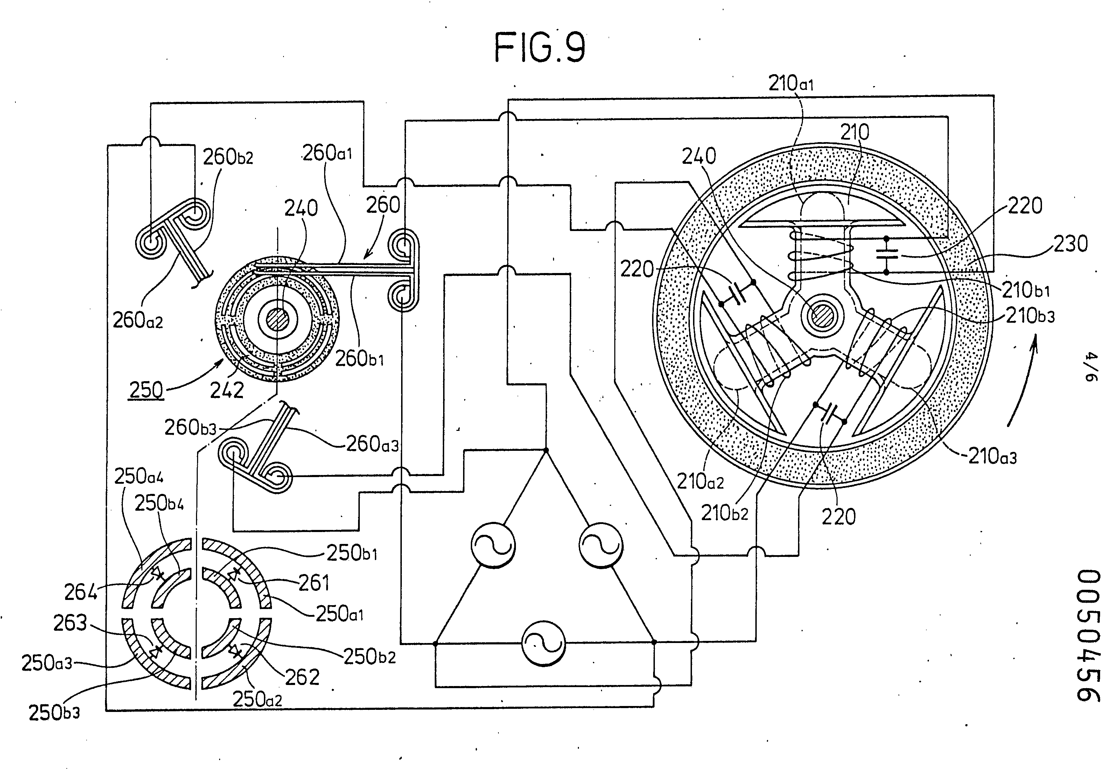

In Fig. 9, stator 210 is disposed in the form of Y with $120^{\circ}$ angles between adjacent cores, and core sections 210a1, 210a2, and 210a3 have coils 210b1, 210b2, and 210b3, respectively, wound via condenser 220 for adjusting the phase of the current. A permanent-magnet rotor 230 has two poles in the form of cylinder and rotates around stator 210 supported by rotor shaft 240. A commutator 250 consists of two concentric circles positioned close to each other. Each circle is divided into four sliders each with a circumferential extent of $90^{\circ}$. All the sliders are held in position by means of insulator 242. The commutator may rotate in union with a rotor shaft 240.

In Fig. 9, the outer sliders are 250a1~250a4 and the inner sliders are 250b1~250b4. For the slider sets of 250a1 and 250b1 and of 250a2 and 250b2, diodes 261 and 262 are provided, respectively, in the direction 250b1→250a1 and 250b2→250a2; and for the slider sets of 250a3 and 250b3 and of 250a4 and 250b4, diodes 263 and 264 are provided, respectively; in the direction 250a3→250b3 and 250a4→250b4.

Three pairs of brushes 260 are disposed with $120^{\circ}$ phase difference between them. In the pairs of 260a1 and 260b1, of 260a2 and 260b2, and of 260a3 and 260b3, the brushes 260a1, 260a2, and 260a3 are in turn in sliding contact with sliders 250a1, 250a2, 250a3, and 250a4; while brushes 260b1, 260b2, and 260b3 are in turn in sliding contact with sliders 250b1, 250b2, 250b3, and 250b4.

Brush 260a1 is connected to the 1st phase of the AC power supply via coil 210b1 and brush 260b1 is connected directly to the 1st phase; brush 260a2 is connected to the 2nd phase via coil 210b2; and brush 260a3 is connected to the 3rd phase via coil 210b3.

Consider the circuit leading from the 1st phase of the AC power supply via brushes 260b1 and 260a1 to coil 210b1. With core section 210a1 corresponding to pole A of rotor 230, while the rotor 230 rotates through 180° diodes 261 and 262 having the same direction with each other cause current to pass from brush 260b1 to brush 260a1, producing pole S on core 210a1. While the rotor 230 rotates through another 180°, diodes 263 and 264 cause current to pass from brush 260a1 to brush 260b1, producing pole N on core 210a1. The production of poles S and N is accompanied by evolution of a turning force. Cores 210a2 and 210a3, in correspondence with the phase difference of brush 60, work similarly with 120° phase delay, supplying the rotor with a turning force.

With this motor no disabling of rotor 230 on starting will occur since the commutator 250 is divided circumferentially at 90° angles, and accordingly even when one pair of brushes are on the insulated gaps the other two pairs of brushes are conductive. If three sets of sliders each of 180° circumferential extent, disposed with circumferential angles of 60° between them, had diodes of the same direction connected, all the three pairs of brushes might happen to be simultaneously on the insulated gaps, with resultant disabling of the rotor.

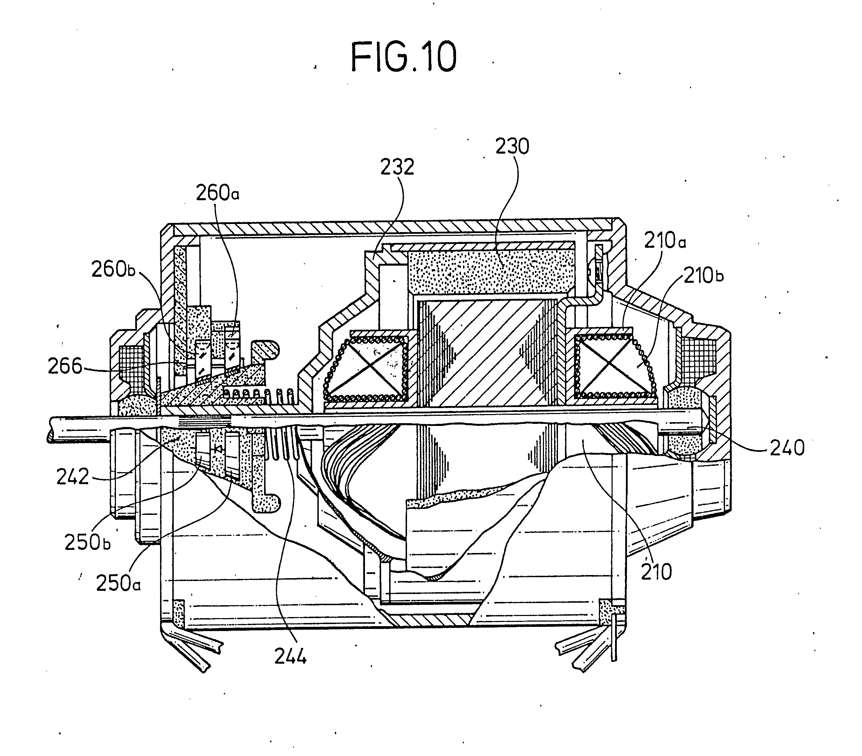

Fig. 10 is a cut-away illustration of the construction of the 2-pole three-phase motor.

Permanent-magnet rotor 230 is attached to a rotor shaft 240 via connector 232 in such a manner that it surrounds stator 210 with its core 210a wound with coil 210b. Sliders 250a and 250b are attached to frusto-conical insulator 242 which rotates in union with connector 232.

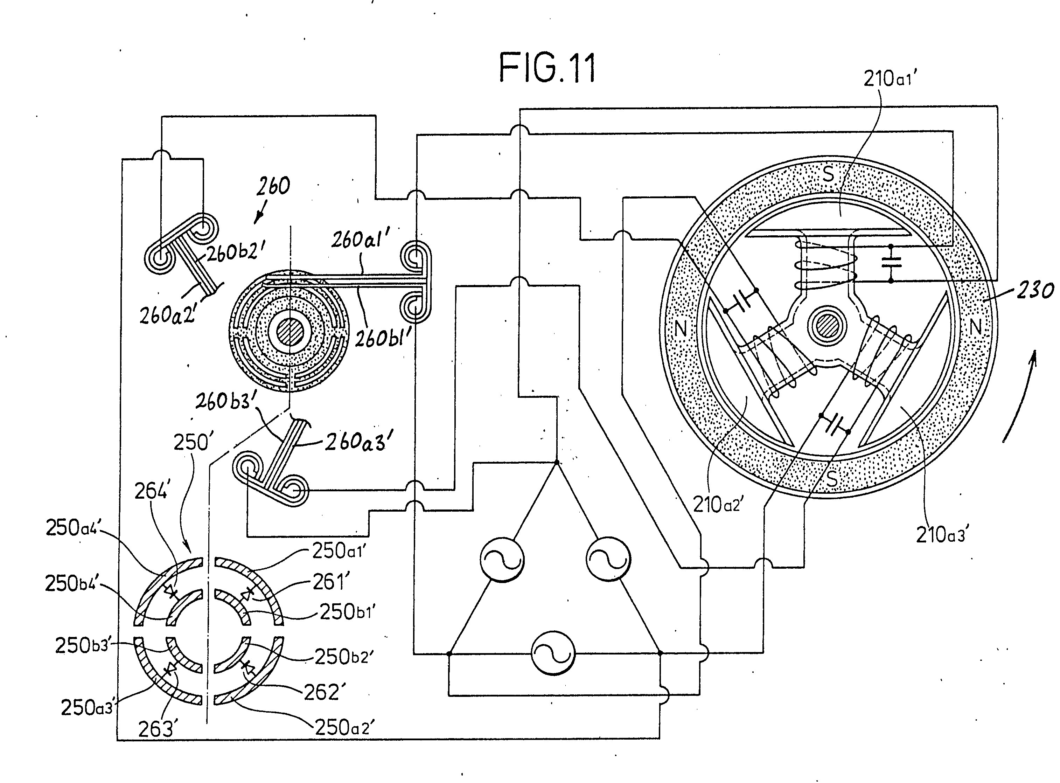

Fig. 11 illustrates the principle of 4-pole three-phase AC motors. Rotary slider 250' is divided into four sets of sliders with circumferential angle 90°. In Fig. 11, the outer sliders are 250a1'~250a4' and the inner sliders

are 250b1'∿250b4'. Diodes 261', 262', 263', and 264' are provided to allow current to pass, respectively, in the directions 250b1'→250a1' for the slider set of 250a1' and 250b1'; 250a2'→250b2' for the set of 250a2' and 250b2'; 250b3'→250a3' for the set of 250a3' and 250b3'; and 250a4'→250b4' for the set of 250a4' and 250b4'. Core 210a1' is connected to the 1st phase of the power supply, core 210a2' to the 3rd, and core 210a3' to the 2nd. Rotor 230 is disposed outside stator 210, but it may be disposed inside the stator, or a planar rotor may be disposed in combination with a planar stator (i.e. of axial gap configuration), and it may be applicable to a single phase AC synchronous motor.

As described above, the present invention may enable motors to be simpler, smaller, and lighter; the invention may be applied to multi-pole as well as 2-pole motors, and also to both single- and three-phase motors; the invention may achieve an increase in output with the aid of condenser.

0050456

CLAIMS:

1.     An electric motor characterised in that 2n poles (n being an integral number) of a permanent-magnet rotor (10) are disposed around a rotor shaft (12) alternately at $2\pi/2n$ angular intervals, $m(\leq n)$ stator pieces (14) with their field cores wound with coils (16) driven by rectified current are disposed around the rotor shaft at m of n positions having $2\pi/n$ angular intervals, at least one set of 2n sliders (18a,18b) are disposed around the rotor shaft at equal angular intervals of $2\pi/2n$, sliders are connected one to another via one or more rectifiers (22) so that the sliders of the or each set are made conductive alternately in the order (+), (-), (+), (-), and so on in the circumferential direction, a pair of fixed brushes (18c,18d) contacting (+) and (-) sliders respectively, one of the brushes (18d) being connected directly to the AC power supply (24) and the other (18c) via a stator coil (16) to the AC power supply.

2.     A motor as claimed in claim 1 wherein the permanent-magnet rotor is placed on the inside and mounted on the rotor shaft, and the stator is placed on the outside and mounted on a support.

3.     A motor as claimed in claim 1 wherein the permanent-magnet rotor is placed on the outside and mounted on the rotor shaft, and the stator is placed on the inside and mounted on a support.

4.     A motor as claimed in claim 1 wherein both the permanent-magnet rotor and the stator are of axial gap configuration.

5.     A three-phase AC motor characterised in that 2n poles (n being an integral number) of a permanent-magnet rotor (230) are disposed around a rotor shaft (240) alternately at circumferential angular intervals of $2\pi/2n$, m($\leqq$n) stator pieces with their field cores (210a1, 2 and 3) wound with coils (210b1, 2 and 3) driven by rectified current are disposed around the rotor shaft at m of n positions having $2\pi/n$ angular intervals, at least one set of 2n sliders (250a1-4 and 250b1-4), the 2n sliders of the or each set being disposed around the rotor shaft at equal angular intervals, the sliders are connected one to another via rectifiers 261-264) so that the 2n sliders of the or each set are made conductive alternately in the order (+), (-), (+), (-), and so on in the circumferential direction, a pair of fixed brushes (260a,b) in contact one with a (+) slider and the other with a (-) slider; three sets of stator cores and brush pairs per stator piece being provided disposed with 120$^{\text{O}}$ phase difference.

6.    A motor as claimed in claim 1 wherein a condenser (32) is placed between the coil (16) and its connected brush (18d).

7.    A motor as claimed in claim 1 wherein a shading coil (50) is attached to the stator (114) of the motor using a single-phase AC power supply.

8.    A three-phase AC motor which comprises a stator (210) with its electromagnetic poles (210a1-3) disposed at angular intervals of 120$^{\text{O}}$, a permanent-magnet rotor (230) with one pole pair disposed equiangularly about the rotor axis, an AC power-supply circuit feeding power from a three-phase AC power supply to said electromagnetic poles, and a conversion circuit, within said AC power-supply circuit, comprising a rectifying means and a switching means which switches over the polarity of the electromagnetic poles as the rotor rotates so that the rotor may be subjected to accelerated rotation; characterized in that said switching means comprises two sets of sliders in the form of two closely-placed concentric circles each divided into four sections (250a1-4 and 250b1-4) at 90° angles, and being rotatable in union with rotor shaft (240), three pairs of brushes (260) disposed at 120° phase difference, one brush 260a1-3) of each pair being in sliding contact with one of the concentric circles (250a1-4) and the other brush (260b1-3) of each pair in sliding contact with the other circle (250b1-4), and rectifiers (261-264) connecting the slider sections of one circle with those of the other circle, in one direction for each of two circumferentially adjacent slider sections (250a1, b1 and a2, b2) and the reverse direction for each of the other two adjacent slider sections (250a3, b3 and a4, b4).

9.      A three-phase AC motor which comprises a stator (210) with its electromagnetic poles (210a1'-3') disposed at angular intervals of 120°, a permanent-magnet rotor (230) with two pole pairs disposed equiangularly, an AC power-supply circuit feeding power from a three-phase AC power supply to said electromagnetic poles, and a conversion circuit, within said AC power-supply circuit, comprising a rectifying means and a switching means which switches over the polarity of the electromagnetic poles as the rotor rotates so that the rotor may be subjected to accelerated rotation; characterized in that said switching means comprises two sets of sliders in the form of two closely-placed concentric circles each divided into four sections (250a1'-4' and 250b1'-4') at 90° angles, and being rotatable in union with rotor shaft, three pairs of brushes (260) disposed at 120° phase difference, one brush (260a1'-3') of each pair being in sliding contact with one of the concentric circles (250a1'-4') and the other brush (260b2'-3') of each pair in sliding contact with the other circle (250b1'-4'), and rectifiers (261'-264') connecting the slider sections of one circle with those of the other circle, in different directions for circumferentially adjacent slider sections.

10.    An  AC synchronous motor, comprising a permanent magnet rotor (10), a stator (14), brushes (18c,18d), a commutator rotating with the rotor and having slider elements (18a,18b) engaged by the brushes, and rectifying means (22) arranged so that an AC current supply is rectified and transmitted via the commutator to the stator coil (16) so as to energize rotation of the rotor towards synchronous speed, characterized in that the rectifying means (22) is incorporated in and rotates with the commutator and interconnects the sliders (18a,18b).

0050456

FIG.1

FIG.2

## FIG.3

## FIG.4

## FIG.5

## FIG.6

# FIG.7

# FIG.8

FIG.9

FIG.10

# FIG.11

0050456

0050456

Application number

EP 81 30 4702

European Patent
Office

**EUROPEAN SEARCH REPORT**

| | | |
|---|---|---|
| **DOCUMENTS CONSIDERED TO BE RELEVANT** | | **CLASSIFICATION OF THE APPLICATION (Int. Cl.³)** |

| Category | Citation of document with indication, where appropriate, of relevant passages | Relevant to claim | |
|---|---|---|---|
| AD | US - A - 3 394 296 (DOTTO)<br>  * Column 4, line 14 to column 5, line 26 * | | H 02 K 19/04 |
| A | GB - A - 925 623 (DUCELLIER)<br>  * Page 1, left-hand column, line 40 to page 2, left-hand column, line 25 * | | |
| A | US - A - 3 173 071 (LEE)<br>  * Column 3, lines 3-40; figure 12 * | | **TECHNICAL FIELDS SEARCHED (Int. Cl.³)**<br><br>H 02 K 19/04<br>19/12<br>7/118<br>13/14 |
| A | GB - A - 968 273 (SIEMENS)<br>  * Page 2, right-hand column, lines 67-103 * | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-01-1982 | TANGOCCI |

EPO Form 1503.1  06.78